# EUROPÄISCHE PATENTSCHRIFT

(11) **EP 3 521 214 B1**
(45) Veröffentlichungstag und Bekanntmachung des Hinweises auf die Patenterteilung: **23.09.2026**
(21) Anmeldenummer: 19153241.5
(22) Anmeldetag: 23.01.2019
(51) Int. Cl.: B65G 19/02, B65G 47/38, B65G 9/00, E05B 65/52

(54) **TRAGVORRICHTUNG ZUM AUFNEHMEN VON WAREN**
SUPPORT DEVICE FOR HOLDING GOODS
DISPOSITIF PORTEUR DESTINÉ À RECEVOIR DES MARCHANDISES

(30) Priorität: 05.02.2018 DE 102018201676
(43) Veröffentlichungstag der Anmeldung: 07.08.2019
(73) Patentinhaber: Dürkopp Fördertechnik GmbH, 33719 Bielefeld (DE)
(72) Erfinder: Wend, Michael, 33619 Bielefeld (DE); Johannesmann, Thomas, 33719 Bielefeld (DE)
(74) Vertreter: Rau, Schneck & Hübner Patentanwälte Rechtsanwälte PartGmbB

(56) Entgegenhaltungen:
- EP-A1- 1 199 002
- EP-A1- 2 130 968
- DE-A1- 3 206 829
- US-A- 3 464 733

## Beschreibung

Die Erfindung betrifft eine Tragvorrichtung zum Aufnehmen von Waren. Aus der EP 2 130 968 A1 ist eine Tragvorrichtung bekannt, aufweisend eine Tragwand mit einer starren Vorderwand sowie einer flexiblen Rückwand und eine Verschlusseinrichtung zur lösbaren Verbindung der Vorderwand mit der Rückwand. Zum Lösen der Verbindung zwischen der Vorderwand und der Rückwand weist die Tragvorrichtung eine Betätigungseinrichtung mit einem beabstandet zu der Verschlusseinrichtung angeordneten Betätigungsmittel und einem zwischen dem Betätigungsmittel und der Verschlusseinrichtung wirkenden Übertragungsmittel auf. Das Übertragungsmittel ist an einer Vorderseite der Vorderwand angeordnet und als starre Zugstange ausgebildet. Um die freigängige Verlagerung des Übertragungsmittels auch bei einer Beladung der Tragvorrichtung mit Waren zu gewährleisten ist die Vorderwand starr ausgebildet. Durch die starre Ausbildung der Vorderwand ist diese besonders schwer und die zum Transport der Waren zur Verfügung stehende maximale Traglast der Tragvorrichtung ist reduziert. Durch die eingeschränkte Flexibilität der Vorderwand ist eine Anpassung an die individuelle Geometrie der Waren zudem nicht möglich, wodurch diese nicht ausreichend fest umschlossen werden und aufgrund transportbedingter Vibrationen und Anfahrbeschleunigungen aus der Tragvorrichtung herausfallen können.

Tragvorrichtungen sind ferner bekannt aus der US 3,464,733 A und der DE 32 06 829 A1. US3464733A offenbart eine Tragvorrichtung nach dem Oberbegriff des Anspruchs 1.

Der Erfindung liegt die Aufgabe zugrunde, eine Tragvorrichtung zum Aufnehmen von Waren derart zu verbessern, dass diese eine erhöhte Traglastlast aufweist und im Betrieb besonders robust ist, wobei die Waren verliersicher in der Tragvorrichtung gehalten werden.

Diese Aufgabe wird durch die Merkmale des Anspruchs 1 gelöst. Der Kern der Erfindung besteht darin, dass die Tragvorrichtung die Betätigungseinrichtung mit dem zwischen dem Betätigungsmittel und der Verschlusseinrichtung wirkenden formflexiblen Übertragungsmittel aufweist. Die Tragvorrichtung ist vorzugsweise eine Transporttasche. Die Betätigungseinrichtung ist dabei zum Lösen der Verbindung zwischen der Vorderwand und der Rückwand aus dem Verschlusszustand ausgebildet und das Betätigungsmittel ist zu der Verschlusseinrichtung beabstandet angeordnet. Das Übertragungsmittel stellt eine kraftübertragende Verbindung zwischen dem Betätigungsmittel mit der Verschlusseinrichtung her. Durch die formflexible Ausbildung des Übertragungsmittels kann sich dessen Form entsprechend der in der Tragvorrichtung aufgenommenen Waren anpassen. Eine starre Ausbildung der Vorderwand und/oder eine lasttragende Ausbildung des Übertragungsmittels können vermieden werden, wodurch diese besonders gewichtsreduziert ausgebildet sein können. Die maximal zulässige Traglast kann somit erhöht werden. Das formflexible Übertragungsmittel gewährleistet zudem die robuste Ausbildung der Betätigungseinrichtung sowie das verliersichere Tragen der Waren.

Die Tragvorrichtung gewährleistet eine sichere Verbindung der Vorderwand mit der Rückwand. Vorzugsweise sind die Vorder-Schließleiste und/oder die Hinter-Schließleiste starr ausgebildet. Die Vorder-Schließleiste und/oder die Hinter-Schließleiste können eine Längserstreckung aufweisen, welche mindestens 50 %, insbesondere mindestens 75 %, insbesondere mindestens 100 %, der Längserstreckung der Tragwand entspricht. Die Verbindung zwischen der Vorderwand und/oder der Rückwand ist somit besonders fest und robust.

Vorzugsweise ragen die Vorder-Schließleiste und/oder die Hinter-Schließleiste auf mindestens einer Seite über eine Erstreckung der Tragwand entlang einer Längsachse der Tragvorrichtung hinaus. Die Verbindung der Vorder-Schließleiste mit der Hinter-Schließleiste kann außerhalb der seitlichen Begrenzung der Tragwand entlang der Längsachse angeordnet sein. Die Waren können somit besonders zuverlässig und ohne Behinderung durch die gelöste Verbindung aus dem Tragvolumen freigegeben werden.

Vorzugsweise weist die Tragwand mindestens eine Seitenwand zum zumindest teilweisen seitlichen Begrenzen des Tragvolumens auf. Die Tragwand kann beispielsweise zwei Seitenwände an den beiden Seiten der Tragvorrichtung aufweisen. Die mindestens eine Seitenwand kann an der Vorderwand und/oder an der Rückwand angebracht sein. Die Waren können somit verliersicher in dem Tragvolumen gehalten werden.

Vorzugsweise ist die Verschlusseinrichtung formschlüssig und/oder kraftschlüssig und/oder stoffschlüssig, insbesondere als separate Komponente, an der Vorderwand und/oder an der Rückwand angebracht. Die Verschlusseinrichtung kann mit der Vorderwand und/oder der Rückwand reversibel verbunden sein. Gemäß einem Aspekt der Erfindung weist die Verschlusseinrichtung mindestens ein mit der Vorderwand und/oder der Rückwand, insbesondere kontaktierend, zusammenwirkendes, formstarres Schließelement auf. Durch die formstarre Ausbildung des Schließelements wird eine besonders zuverlässige und robuste Verbindung zwischen der Vorderwand und der Rückwand erreicht.

Die mindestens eine Seitenwand kann eine Faltung aufweisen. Die Faltung ist vorzugsweise nach innen, in Richtung des Tragvolumens, gerichtet. Ein Abstand zwischen der Vorderwand und der Rückwand ist somit veränderbar. Die Tragvorrichtung kann somit sehr flach zusammengelegt werden. Beim Befüllen der Tragvorrichtung mit Waren kann sich die mindestens eine Seitenwand auffalten, wodurch das Tragvolumen besonders flexibel an die jeweilige Geometrie der Waren anpassbar ist.

Die mindestens eine Seitenwand kann starr ausgebildet sein. Die mindestens eine Seitenwand kann gelenkig miteinander verbundene starre Seitenwand-Glieder aufweisen.

Die Tragvorrichtung kann eine Innentasche aufweisen. Die Innentasche kann zwischen der Vorderwand und der Rückwand angeordnet sein. Vorzugsweise ist die Innentasche an der Vorderwand und/oder an der Rückwand angebracht. Die Innentasche kann das Tragvolumen zumindest teilweise zu den Seiten und/oder nach vorne und/oder nach hinten begrenzen. Die Innentasche ist vorzugsweise derart ausgebildet, dass sie das Tragvolumen in dem Verschlusszustand nach unten begrenzt und in dem Offenzustand nach unten freigibt. Die Innentasche gewährleistet, dass das Tragvolumen zumindest teilweise seitlich begrenzt ist und dass die Waren beim Verlagern der Tragvorrichtung aus dem Verschlusszustand in den Offenzustand besonders zuverlässig aus dem Tragvolumen freigegeben werden.

Das Übertragungsmittel erstreckt sich vorzugsweise über mindestens 20 %, insbesondere mindestens 30 %, insbesondere mindestens 50 %, insbesondere mindestens 75 %, insbesondere mindestens 100 %, der Höhe der Tragwand in dem Verschlusszustand. Vorteilhaft wird hierdurch erreicht, dass das Betätigungsmittel in einem oberen Bereich der Tragvorrichtung angeordnet sein kann, in dem die Tragvorrichtung besonders stabil gelagert ist, wobei die Verschlusseinrichtung zur schwerkraftbasierten Freigabe der Waren an einem unteren Ende der Tragvorrichtung angeordnet sein kann.

Eine Tragvorrichtung nach Anspruch 3 gewährleistet ein zuverlässiges Halten der Waren in dem Tragvolumen und eine gewichtsreduzierte Ausbildung der Betätigungseinrichtung. Unter der biegeweichen Ausbildung des Übertragungsmittels wird verstanden, dass das Übertragungsmittel um eine Achse, insbesondere eine senkrecht zu einer Längserstreckung des Übertragungsmittels orientierte Achse, reversibel, also ohne eine Schädigung des Übertragungsmittels, insbesondere ohne ein Überschreiten einer Elastizitätsgrenze des Übertragungsmittels, biegbar ist. Vorzugsweise ist das Übertragungsmittel in mindestens einem Teilbereich derart ausgebildet, dass dessen Krümmung um mindestens 0,01 mm⁻¹, insbesondere mindestens 0,02 mm⁻¹, insbesondere mindestens 0,04 mm⁻¹ reversibel veränderbar ist. Das Übertragungsmittel weist somit eine besonders hohe Flexibilität auf und ist besonders gut an die individuelle Geometrie der Waren anpassbar. Durch die biegeweiche Ausbildung des Übertragungsmittels wird die Aufnahme von Querkräften weitgehend verhindert, wodurch das Übertragungsmittel besonders leichtgewichtig ausgeführt werden kann.

Gemäß einem Aspekt der Erfindung ist das Übertragungsmittel entlang seiner Längserstreckung reversibel verlängerbar. Eine derartige Tragvorrichtung gewährleistet ein verliersicheres Halten der Waren in dem Tragvolumen und eine gewichtsreduzierte Ausbildung der Betätigungseinrichtung. Das Übertragungsmittel kann zueinander verschiebbar gelagerte Übertragungssegmente aufweisen und/oder dehnbar ausgebildet sein. Hierdurch wird eine Änderung einer von dem Übertragungsmittel zwischen der Verschlusseinrichtung und dem Betätigungsmittel überspannten Strecke ermöglicht. Das Übertragungsmittel kann hierbei seitlich der Tragwand angeordnet sein. Eine Formänderung der Tragwand aufgrund der in das Tragvolumen eingebrachten Waren wird durch das Übertragungsmittel nicht behindert, wodurch die Waren besonders sicher und fest umschlossen werden können. Die auf das Übertragungsmittel wirkenden Kräfte sind zudem gering, wodurch dieses leicht ausgebildet werden kann und im Betrieb besonders robust ist.

Vorzugsweise sind die Übertragungssegmente entlang der Längserstreckung zueinander verschiebbar gelagert. Das Übertragungsmittel kann in Form einer Teleskopstange ausgebildet sein. Unter der dehnbaren Ausbildung des Übertragungsmittels wird hingegen verstanden, dass die Erstreckung des Übertragungsmittels, insbesondere entlang der Längserstreckung des Übertragungsmittels, reversibel, insbesondere ohne eine Schädigung zu erfahren, insbesondere innerhalb einer Elastizitätsgrenze des Übertragungsmittels, dehnbar ist. Vorzugsweise ist die Längserstreckung des Übertragungsmittels zumindest abschnittsweise um mindestens 2 %, insbesondere mindestens 5 %, insbesondere mindestens 10 %, insbesondere mindestens 20 %, insbesondere mindestens 50 %, insbesondere mindestens 100 %, veränderbar.

Eine Tragvorrichtung nach Anspruch 4 ist im Betrieb besonders robust und gewährleistet zuverlässig das Lösen der Verbindung zwischen der Vorderwand und der Rückwand. Vorzugsweise ist das Übertragungsmittel zur Übertragung mechanischer Kräfte ausgebildet. Dadurch, dass das Übertragungsmittel einen Bowdenzug und/oder eine Hydraulikleitung aufweist, können die mechanischen Kräfte besonders reibungsarm und damit effizient zwischen der Betätigungseinrichtung und der Verschlusseinrichtung übertragen werden. Der Bowdenzug und/oder die Hydraulikleitung können biegeweich ausgebildet sein. Der Bowdenzug und/oder die Hydraulikleitung erlauben besonders große Krümmungsänderungen.

Gemäß einem Aspekt der Erfindung ist die Tragwand zumindest bereichsweise formflexibel ausgebildet. Eine derartige Tragvorrichtung gewährleistet die gewichtsreduzierte Ausbildung der Tragvorrichtung und das verliersichere Halten der Waren in dem Tragvolumen. Durch die zumindest bereichsweise formflexible Ausbildung der Tragwand, insbesondere der Vorderwand und/oder der Rückwand, können die Waren von der Tragwand besonders fest umschlossen werden. Die Tragwand kann, insbesondere aufgrund der biegeweichen Ausgestaltung, besonders dünnwandig und damit leicht ausgebildet sein. Vorzugsweise besteht die Tragwand zumindest bereichsweise aus einem textilen Material. Die Tragwand ist vorzugsweise dehnsteif und/oder biegeweich ausgebildet.

Eine Tragvorrichtung nach Anspruch 5 gewährleistet ein robustes Lagern der Tragvorrichtung entlang eines Schienensystems. Vorzugsweise ist das Übertragungsmittel vollständig vor der Vorderwand oder hinter der Rückwand angeordnet. Durch die Anordnung des Übertragungsmittels zumindest abschnittsweise vor der Vorderwand kann ein seitliches Überstehen des Übertragungsmittels vermieden werden und die Tragvorrichtung kann ohne ein Verhängen sicher entlang des Schienensystems verlagert werden. Durch die formflexible Ausbildung des Übertragungsmittels und die zumindest teilweise formflexible Ausbildung der Vorderwand kann sich diese zusammen mit dem Übertragungsmittel entsprechend der Abmessungen der Waren verformen, wodurch die Waren verliersicher in dem Tragvolumen gehalten werden können.

Vorzugsweise weist die Vorderwand und/oder die Rückwand mindestens eine Führungsschlaufe zur Führung des Übertragungsmittels auf. Das Übertragungsmittel kann sich durch die mindestens eine Führungsschlaufe hindurch erstrecken. Hierdurch kann gewährleistet werden, dass das Übertragungsmittel eng an der Vorderwand und/oder der Rückwand anliegt. Ein Verhängen des Übertragungsmittels wird somit verhindert und die Handhabung der Tragvorrichtung wird verbessert.

Vorzugsweise ist die mindestens eine Führungsschlaufe an einem seitlichen Rand der Vorderwand und/oder der Rückwand angebracht. Die mindestens eine Führungsschlaufe kann zu dem seitlichen Rand der Vorderwand und/oder der Rückwand einen Abstand von maximal 50 mm, insbesondere maximal 30 mm, insbesondere maximal 20 mm, aufweisen. Vorzugsweise ist die mindestens eine Führungsschlaufe vertikal orientiert. Die mindestens eine Führungsschlaufe kann auch an einem oberen und/oder an einem unteren Rand der Vorderwand und/oder der Rückwand angebracht sein. Vorzugsweise ist die an dem oberen und/oder dem unteren Rand angeordnete mindestens eine Führungsschlaufe horizontal orientiert.

Eine Tragvorrichtung nach Anspruch 6 gewährleistet die verliersichere Aufnahme der Waren in dem Tragvolumen. Vorzugsweise sind eine Unterseite der Vorderwand mit der Vorder-Schließleiste und/oder eine Unterseite der Rückwand mit der Hinter-Schließleiste verbunden. Vorzugsweise ist die Vorderwand, insbesondere in dem Offenzustand, über die gesamte Erstreckung Ihrer Unterseite an der Vorder-Schließleiste angebracht. Vorzugsweise ist die Rückwand, insbesondere in dem Offenzustand, über die gesamte Erstreckung Ihrer Unterseite an der Hinter-Schließleiste angebracht. Hierdurch können die Waren in dem Verschlusszustand besonders sicher in dem Tragvolumen gehalten werden.

Die Vorderwand kann eine Vorder-Schließleisten-Schlaufe zur Befestigung der Vorder-Schließleiste an der Vorderwand aufweisen. Die Rückwand kann eine Hinter-Schließleisten-Schlaufe zur Befestigung der Hinter-Schließleiste an der Rückwand aufweisen. Vorzugsweise ist die Vorder-Schließleisten-Schlaufe mit der Vorder-Schließleiste über ein Schlaufen-Verbindungsmittel verbunden. Die Hinter-Schließleisten-Schlaufe kann mit der Hinter-Schließleiste über ein Schlaufen-Verbindungsmittel verbunden sein. Das Schlaufen-Verbindungsmittel kann als kraftschlüssige Verbindung, insbesondere als Schraubverbindung und/oder als Klemmverbindung, und/oder als formschlüssige Verbindung, insbesondere als Nietverbindung und/oder als Sicherungsstift, und/oder als stoffschlüssige Verbindung, insbesondere als Klebverbindung und/oder Schweißverbindung, ausgebildet sein. Vorteilhaft wird hierdurch erreicht, dass die Vorder-Schließleiste und/oder die Hinter-Schließleiste gegen ein Herausfallen aus der Vorder-Schließleisten-Schlaufe und/oder der Hinter-Schließleisten-Schlaufe gesichert ist.

Eine Tragvorrichtung nach Anspruch 7 gewährleistet eine zuverlässige Öffnung der Verschlusseinrichtung aus dem Verschlusszustand in den Offenzustand. Die verschiebbare Lagerung der Vorder-Schließleiste relativ zu der Hinter-Schließleiste und schräg zu der Längsachse gewährleistet eine Unterstützung der Verlagerung der Tragwand in den Offenzustand durch das Eigengewicht der Waren. Vorzugsweise ist die verschiebbare Lagerung der Vorder-Schließleiste relativ zu der Hinter-Schließleiste senkrecht zu der Längsachse ausgebildet. Die Vorder-Schließleiste und die Hinter-Schließleiste können zum Verlagern aus dem Verschlusszustand linear verschiebbar aneinander gelagert sein. Die Verschlusseinrichtung kann ein Führungsmittel zum geführten Verlagern der Vorder-Schließleiste relativ zu der Hinter-Schließleiste aufweisen. Das Führungsmittel kann eine Nut-Feder-Verbindung aufweisen. Das Öffnen der Verschlusseinrichtung erfolgt somit besonders robust und die Waren werden zuverlässig freigegeben.

Eine Tragvorrichtung nach Anspruch 8 gewährleistet zuverlässig das Lösen der Verbindung zwischen der Vorderwand und der Rückwand aus dem Verschlusszustand und stellt damit die Freigabe der Waren aus dem Tragvolumen sicher. Das Federmittel kann als Spiralfeder, insbesondere als Druckfeder und/oder als Zugfeder und/oder als Drehfeder, und/oder als Blattfeder und/oder als gummielastisches Element ausgebildet sein. Vorzugsweise ist das Federmittel derart zwischen der Vorder-Schließleiste und der Hinter-Schließleiste angeordnet, dass es in dem Verschlusszustand gespannt und in dem Offenzustand entspannt ist. Vorteilhaft wird hierdurch erreicht, dass das Verlagern der Verschlusseinrichtung aus dem Verschlusszustand in den Offenzustand durch das Federmittel unterstützt wird. Die Freigabe der Waren aus dem Tragvolumen erfolgt somit besonders zuverlässig.

Eine Tragvorrichtung nach Anspruch 9 gewährleistet ein zuverlässiges Verlagern der Verschlusseinrichtung aus dem Offenzustand in den Verschlusszustand. Vorzugsweise ist das Zentriermittel als Erhebung, insbesondere als Zentrierstift und/oder als Zentrierrippe, ausgebildet. Das Zentriermittel kann an der Vorder-Schließleiste und/oder an der Hinter-Schließleiste angebracht sein. Vorzugsweise wirkt das Zentriermittel mit einer Vertiefung, insbesondere einer Zentrierbohrung und/oder einer Zentriernut, zusammen. Die Vertiefung kann an der Vorder-Schließleiste und/oder an der Hinter-Schließleiste angebracht sein. Die Vorder-Schließleiste und die Hinter-Schließleiste können somit besonders sicher und robust, insbesondere automatisierbar, aus dem Offenzustand in den Verschlusszustand verlagert werden.

Eine erfindungsgemäße Tragvorrichtung gewährleistet ein sicheres Verbinden der Vorderwand mit der Rückwand in dem Verschlusszustand. Die Verschlusseinrichtung kann auch mindestens drei, Schließriegel aufweisen. Mindestens zwei der Schließriegel sind relativ zueinander verlagerbar, insbesondere verschiebbar und/oder drehbar. Die Schließriegel können um zwei zueinander beabstandet angeordnete Riegelachsen drehbar gelagert sein. Die drehbare Lagerung des Schließriegels ist besonders reibungsarm und robust. Der mindestens eine Schließriegel greift in dem Verschlusszustand vorzugsweise in mindestens einen Riegeleingriff ein. Der mindestens eine Schließriegel kann einen Riegelstift zum reversiblen Eingreifen in den mindestens einen Riegeleingriff aufweisen. Beispielsweise können der Schließriegel an der Vorder-Schließleiste und der Riegeleingriff an der Hinter-Schließleiste angebracht sein. Alternativ können der Schließriegel auch an der Hinter-Schließleiste und der Riegeleingriff an der Vorder-Schließleiste angebracht sein.

Die Hinter-Schließleiste und/oder die Vorder-Schließleiste können eine Dicke in einem Bereich von 5 mm bis 40 mm, insbesondere in einem Bereich von 10 mm bis 30 mm, insbesondere in einem Bereich von 20 mm bis 25 mm, aufweisen. Vorzugsweise ragt der Riegeleingriff in dem Verschlusszustand nicht über die Vorder-Schließleiste und/oder die Hinter-Schließleiste hinaus.

Vorzugsweise ist der Riegeleingriff im Bereich des Zentriermittels angeordnet. Da Zentriermittel kann durch den Riegeleingriff ausgebildet sein.

Vorzugsweise bildet der Schließriegel zusammen mit dem mindestens einen Riegeleingriff eine formschlüssige Verbindung aus. Durch die formschlüssige Verbindung kann die Vorderwand mit der Rückwand besonders zuverlässig verbunden werden.

Die Verschlusseinrichtung und/oder die Betätigungseinrichtung können mindestens eine Schließfeder zum Ausüben einer Schließfederkraft auf den Schließriegel aufweisen. Die Schließfeder ist vorzugsweise derart ausgebildet, dass die Schließfederkraft eine Verlagerung des Schließriegels in den Verschlusszustand bewirkt. Der Schließriegel wird somit sicher in dem Verschlusszustand gehalten und ein ungewolltes Lösen der Verschlusseinrichtung wird zuverlässig verhindert. Die Schließfeder kann als Zugfeder und/oder als Druckfeder und/oder als Drehfeder ausgebildet sein. Die mindestens eine Schließfeder kann an dem Übertragungsmittel angebracht sein. Alternativ oder zusätzlich kann die mindestens eine Schließfeder an dem mindestens einen Schließriegel angebracht sein. Vorzugsweise wirkt die mindestens eine Schließfeder zwischen dem mindestens einen Schließriegel und der Vorder-Schließleiste und/oder der Hinter-Schließleiste.

Die Tragvorrichtung ist im Betrieb besonders robust und gewährleistet ein Verbinden der Vorderwand mit der Rückwand in dem Verschlusszustand auf besonders zuverlässige Weise. Die mindestens zwei Schließriegel können translatorisch und/oder rotatorisch relativ zueinander verlagerbar sein. Die mindestens zwei Schließriegel können an der Vorder-Schließleiste und/oder an der Hinter-Schließleiste angeordnet sein. Vorzugsweise sind die mindestens zwei Schließriegel an derselben Schließleiste angeordnet. Die mindestens zwei Schließriegel sind zum Verlagern aus einer Verschlussstellung in eine Offenstellung vorzugsweise gegenläufig zueinander verschiebbar und/oder verdrehbar. Gemäß einem weiteren Aspekt der Verbindung können die mindestens zwei Schließriegel derart ausgebildet sein, dass diese nacheinander in Eingriff mit dem jeweiligen Riegeleingriff gelangen. Eine zum Schließen der Verschlusseinrichtung benötigte Kraft kann somit besonders gering sein.

Gemäß einem Aspekt der Erfindung sind die mindestens zwei Schließriegel unabhängig voneinander mittels des Betätigungsmittels verlagerbar. Die Schließriegel können hierzu mit jeweils einem Übertragungsmittel in Wirkverbindung stehen.

Eine Tragvorrichtung nach Anspruch 10 ist besonders einfach handhabbar und im Betrieb robust. Vorzugsweise verbindet die Kopplungseinheit die mindestens zwei Schließriegel derart, dass die mindestens zwei Schließriegel über ein einziges Übertragungsmittel aus der Verschlussstellung in die Offenstellung verlagerbar sind. Dadurch, dass die Tragvorrichtung lediglich ein einziges Übertragungsmittel aufweisen muss, ist dieses besonders einfach handhabbar und wirtschaftlich herstellbar.

Gemäß einem Aspekt der Erfindung ist die Kopplungseinheit derart ausgebildet, dass zwischen den Schließriegeln lediglich Kräfte zum Verlagern des jeweiligen Schließriegels aus der Verschlussstellung in die Offenstellung übertragen werden können, nicht jedoch Kräfte zum Verlagern aus der Offenstellung in die Verschlussstellung.

Die Kopplungseinheit kann ein Umlenkmittel aufweisen. Vorzugsweise wirkt das Übertragungsmittel über das Umlenkmittel auf die mindestens zwei Schließriegel. Das Umlenkmittel ist vorzugsweise drehbar gelagert. Das Umlenkmittel kann mit mindestens einem der Schließriegel formschlüssig verbunden sein. Hierzu kann das Umlenkmittel einen Betätigungsstift aufweisen. Der Betätigungsstift kann in eine Betätigungsausnehmung des Schließriegels eingreifen.

Die Kopplungseinheit kann einen Seilzug aufweisen. Vorzugsweise steht mindestens einer der Schließriegel mit dem Umlenkmittel über den Seilzug in Wirkverbindung. Vorzugsweise ist der Seilzug lediglich zum Übertragen von Zugkräften, nicht jedoch von Druckkräften ausgebildet. Die Betätigungsausnehmung kann als Nut ausgebildet sein. Vorteilhaft wird hierdurch erreicht, dass das Übertragungsmittel lediglich ein Öffnen der mindestens zwei Schließriegel bewirken kann. Die Schließriegel werden durch das Übertragungsmittel der Verschlussstellung nicht arretiert. Die Schließriegel können aus der Verschlussstellung in die Offenstellung verlagert werden. Das Verbinden der Schließriegel mit dem jeweiligen Riegeleingriff kann somit besonders leichtgängig erfolgen. Die Schließriegel können mit dem jeweiligen Riegeleingriff eine Rastverbindung ausbilden.

Eine Tragvorrichtung nach Anspruch 11 gewährleistet eine besonders sichere Verbindung der Vorderwand mit der Rückwand in dem Verschlusszustand. Vorzugsweise sind die mindestens zwei Riegeleingriffe entlang der Längsachse zueinander beabstandet angeordnet. Die mindestens zwei Riegeleingriffe können in einer Draufsicht vollständig außerhalb einer seitlichen Begrenzung der Tragwand angeordnet sein.

Die mindestens zwei Riegeleingriffe weisen vorzugsweise mindestens eine Schließfase auf. Die Schließfase kann derart ausgebildet sein, dass diese beim Verlagern der Verschlusseinrichtung aus dem Offenzustand in den Verschlusszustand ein Moment auf den Schließriegel überträgt. Die mindestens eine Schließfase kann ein Einrasten des Verschließriegels aus dem Offenzustand in den Verschlusszustand, insbesondere ohne ein Betätigen der Betätigungseinrichtung, ermöglichen.

Eine Tragvorrichtung nach Anspruch 12 gewährleistet die sichere Verbindung zwischen der Vorderwand und der Rückwand in dem Verschlusszustand. Durch die um mindestens 20°, insbesondere mindestens 140°, insbesondere mindestens 160°, insbesondere 180°, zueinander versetzte Anordnung der mindestens zwei Riegeleingriffe relativ zu der Riegelachse kann die Vorderwand an der Rückwand besonders robust und spielfrei befestigt werden.

Eine Tragvorrichtung nach Anspruch 13 gewährleistet eine zuverlässige Verlagerung der Tragvorrichtung aus dem Verschlusszustand in den Offenzustand. Die Aufhängeeinrichtung ist vorzugsweise zur Befestigung der Tragvorrichtung an einem Rolladapter eines Schienensystems ausgebildet. Die Aufhängeeinrichtung kann einen Transporthaken zur Verbindung mit dem Rolladapter aufweisen. Das Betätigungsmittel kann unterhalb eines Hakeneingriffs, an dem der Transporthaken in Kontakt mit dem Rolladapter gelangt, angeordnet sein. Vorzugsweise ist das Betätigungsmittel im Bereich einer geraden Linie, welche durch den Hakeneingriff und einen Schwerpunkt der Tragvorrichtung verläuft, angeordnet. Ein Abstand zwischen dem Hakeneingriff und dem Betätigungsmittel beträgt vorzugsweise maximal 200 mm, insbesondere maximal 150 mm, insbesondere maximal 100 mm, insbesondere maximal 50 mm, insbesondere maximal 25 mm. Hierdurch wird gewährleistet, dass die Tragvorrichtung beim Auslösen des Betätigungsmittels höchstens geringfügig aus seiner stabilen Lage ausgelenkt wird. Das Betätigungsmittel kann somit besonders zuverlässig ausgelöst werden.

Das Betätigungsmittel ist vorzugsweise als Betätigungshebel ausgebildet und um eine, insbesondere zu der Längsachse parallele, Hebelachse drehbar gelagert. Das Betätigungsmittel kann derart ausgebildet sein, dass es mittels einer in horizontaler Richtung, insbesondere entgegen einer Transportrichtung der Tragvorrichtung, wirkenden Betätigungskraft auslösbar ist. Das Betätigungsmittel kann somit zuverlässig, insbesondere automatisierbar, betätigt werden.

Weitere vorteilhafte Ausgestaltungen, zusätzliche Merkmale und Einzelheiten ergeben sich aus der nachfolgenden Beschreibung mehrerer Ausführungsbeispiele anhand der Figuren. Es zeigen:
- Fig. 1: eine perspektivische Darstellung einer Tragvorrichtung in einem Verschlusszustand von schräg vorne mit einer Tragwand, einer Verschlusseinrichtung und einer Betätigungseinrichtung,
- Fig. 2: eine perspektivische Darstellung der Tragvorrichtungen in Fig. 1 in einem Offenzustand,
- Fig. 3: eine perspektivische Darstellung der Tragvorrichtungen in Fig. 1 von schräg hinten,
- Fig. 4: eine Schnittdarstellung der Verschlusseinrichtung entlang einer Schnittlinie IV in Fig. 3,
- Fig. 5: eine Schnittdarstellung der Tragvorrichtung entlang einer Schnittlinie V-V in Fig. 3,
- Fig. 6: eine Schnittdarstellung der Tragvorrichtung entlang der Schnittlinie VI-VI in Fig. 2, wobei die Tragvorrichtung in einem Offenzustand dargestellt ist,
- Fig. 7: eine teilweise geschnittene Detaildarstellung einer Aufhängeeinrichtung der Tragvorrichtung entlang einer Schnittlinie VII-VII in Fig. 3,
- Fig. 8: eine Schnittdarstellung einer Tragvorrichtung gemäß einem weiteren Ausführungsbeispiel in einem Verschlusszustand, wobei die Tragvorrichtung eine Verschlusseinrichtung mit zwei mit einem Übertragungsmittel in Wirkverbindung stehenden und relativ zueinander verlagerbaren Schließriegeln aufweist,
- Fig. 9: eine Detaildarstellung der Verschlusseinrichtung in Fig. 8, wobei das Übertragungsmittel mit den Schließriegeln über eine Kopplungseinheit verbunden ist,
- Fig. 10: eine Schnittdarstellung der Verschlusseinrichtung in Fig. 8, wobei die Verschlusseinrichtung in einem Offenzustand dargestellt ist und
- Fig. 11: eine perspektivische Darstellung der Verschlusseinrichtung in Fig. 8, wobei die Verschlusseinrichtung in dem Offenzustand angeordnet ist und wobei eine Vorder-Schließleiste beabstandet zu einer Hinter-Schließleiste angeordnet ist.

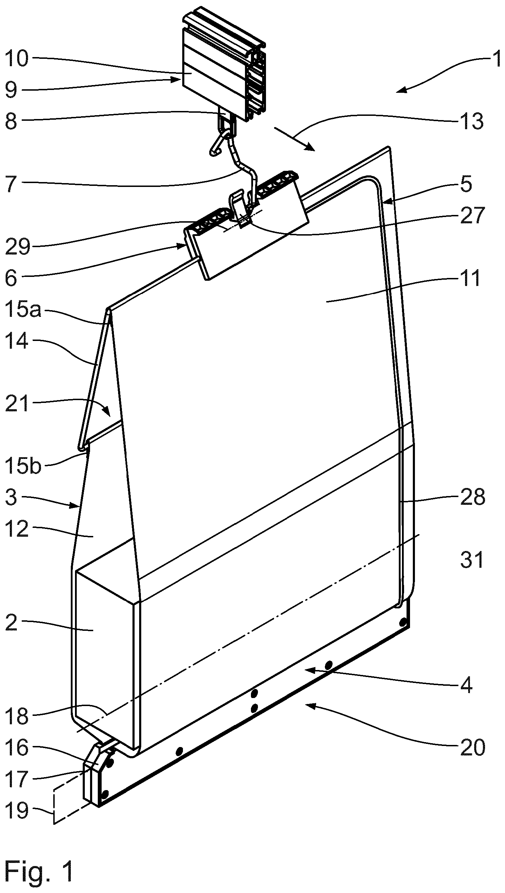

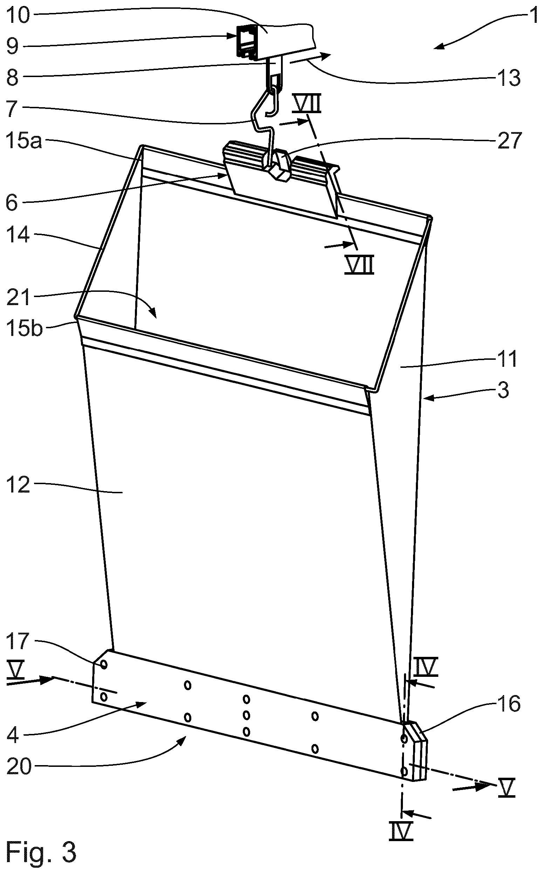

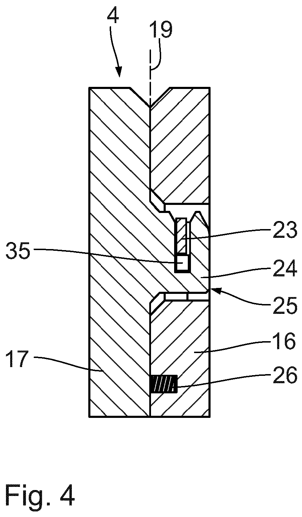

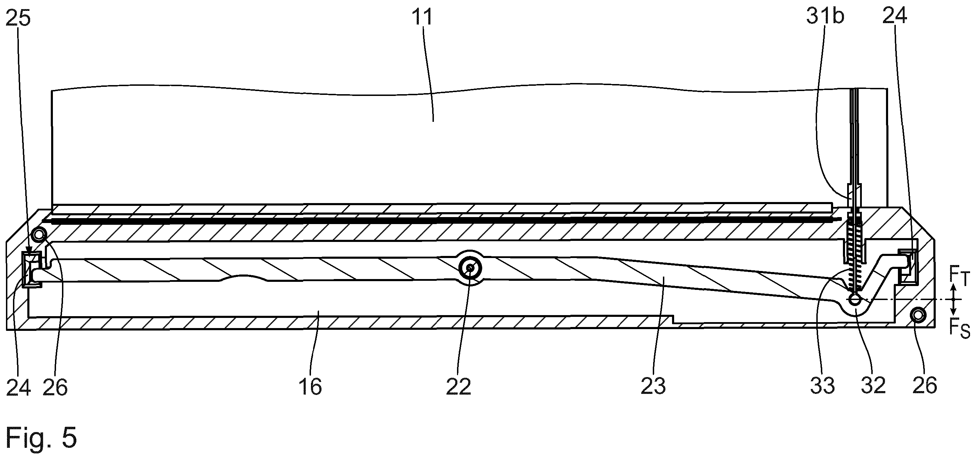

Nachfolgend ist anhand der Fig. 1 bis Fig. 7 ein Ausführungsbeispiel einer Tragvorrichtung 1 zum Aufnehmen von Waren 2, welches nicht Teil der vorliegenden Erfindung ist, beschrieben. Die Tragvorrichtung 1 weist eine Tragwand 3, eine Verschlusseinrichtung 4, eine Betätigungseinrichtung 5 und eine Aufhängeeinrichtung 6 auf.

Die Aufhängeeinrichtung 6 ist an der Tragwand 3 angebracht. Die Aufhängeeinrichtung 6 umfasst einen Transporthaken 7 zum Befestigen der Tragvorrichtung 1 an einem Rolladapter 8 eines Schienensystems 9. Der Rolladapter 8 ist in einem Führungsprofil 10 des Schienensystems 9 linear verschiebbar gelagert. Mittels eines nicht dargestellten Schienenantriebs kann der Rolladapter 8 zusammen mit der daran angebrachten Tragvorrichtung 1 entlang des Führungsprofils 10 automatisiert verlagert werden. Die Tragwand 3 weist eine Vorderwand 11 und eine Rückwand 12 auf. Die Vorderwand 11 ist entlang einer Transportrichtung 13 vorne und die Rückwand 12 ist entlang der Transportrichtung 13 hinten an der Tragvorrichtung 1 angeordnet. Die Vorderwand 11 ist über einen Beladerahmen 14 an der Aufhängeeinrichtung 6 angebracht. Hierzu weist die Vorderwand 11 an Ihrer Oberseite eine Rahmenschlaufe 15a auf. Eine Vorderseite des Beladerahmens 14 erstreckt sich durch die Rahmenschlaufe 15a der Vorderwand 11 hindurch. Eine Oberseite der Rückwand 12 ist über eine Rahmenschlaufe 15b an einer Rückseite des Beladerahmens 14 angebracht. Die Vorderwand 11 und die Rückwand 12 sind somit über den Beladerahmen 14 an der Aufhängeeinrichtung 6 angebracht.

Die Verschlusseinrichtung 4 weist eine Vorder-Schließleiste 16 und eine Hinter-Schließleiste 17 auf. Die Verschlusseinrichtung 4 weist eine parallel zu einer Längsachse 18 der Tragvorrichtung 1 orientierte Haupterstreckung auf. Die Verschlusseinrichtung 4 überragt die Tragwand 3 entlang der Längsachse 18 zu beiden Seiten. Die Unterseite der Vorderwand 11 ist an der Vorder-Schließleiste 16 angebracht. Die Unterseite der Rückwand 12 ist an der Hinter-Schließleiste 17 angebracht. Die Tragvorrichtung 1 weist eine vertikal und parallel zu der Längsachse 18 orientierte Mittelebene 19 auf.

In der Fig. 1 ist die Tragvorrichtung 1 in einem Verschlusszustand 20 dargestellt. Eine Unterseite der Vorderwand 11 ist über die Verschlusseinrichtung 4 mit einer Unterseite der Rückwand 12 verbunden. Die Vorder-Schließleiste 16 ist hierzu an der Hinter-Schließleiste 17 befestigt und die Tragwand 3 begrenzt ein Tragvolumen 21 nach vorne, nach hinten und nach unten. Die Vorder-Schließleiste 16 kontaktiert die Hinter-Schließleiste 17 im Bereich der Mittelebene 19. Die Vorderwand 11 und die Rückwand 12 sind aus einem textilen Material und formflexibel ausgebildet. Die in dem Tragvolumen 21 angeordneten Waren 2 befinden sich aufgrund der Schwerkraft an einer Unterseite der Tragwand 3. Aufgrund der flexiblen, insbesondere biegeweichen, Ausbildung der Tragwand 3 nimmt diese eine der Form der Waren 2 entsprechende Form an. Die Waren 2 werden somit fest in dem Tragvolumen 21 gehalten.

Die Verschlusseinrichtung 4 weist einen drehbar um eine Riegelachse 22 gelagerten Schließriegel 23 auf. Der Schließriegel 23 ist an der Vorder-Schließleiste 16 angebracht. Die Riegelachse 22 ist senkrecht zu der Mittelebene 19 orientiert. Der Schließriegel 23 erstreckt sich im Wesentlichen entlang der Längsachse 18. In dem Verschlusszustand 20 steht der Schließriegel 23 in Eingriff mit zwei Riegeleingriffen 24 der Verschlusseinrichtung 4. Die beiden Riegeleingriffe 24 sind an der Hinter-Schließleiste 17 angebracht. Die Riegeleingriffe 24 sind entlang der Längsachse 18 zueinander beabstandet und außerhalb einer seitlichen Begrenzung der Tragwand 3 angeordnet. Die Riegeleingriffe 24 sind als Erhebung ausgebildet, welche in dem Verschlusszustand 20 in eine Vertiefung der Vorder-Schließleiste 16 eingreifen. In dem Verschlusszustand 20 umgreift der Riegeleingriff 24 den Schließriegel 23 formschlüssig.

Die Riegeleingriffe 24 weisen je eine Fase zum zuverlässigen Einführen in die jeweilige Vertiefung der Vorder-Schließleiste 16 auf. Die Riegeleingriffe 24 sind dabei als Zentriermittel 25, insbesondere als Zentrierstift, ausgebildet. Über den Riegeleingriff 24 und die Vertiefung ist die Vorder-Schließleiste 16 relativ zu der Hinter-Schließleiste 17 senkrecht zu der Mittelebene 19 verschiebbar gelagert. Die Riegeleingriffe 24 sind relativ zu der Riegelachse 22 um 180° gegeneinander versetzt angeordnet.

Zwischen der Vorder-Schließleiste 16 und der Hinter-Schließleiste 17 sind zwei Federmittel 26 angeordnet. Die Federmittel 26 bewirken eine senkrecht zu der Mittelebene 19 orientierte Öffnungskraft zwischen der Vorder-Schließleiste 16 und der Hinter-Schließleiste 17.

Die Betätigungseinrichtung 5 umfasst ein Betätigungsmittel 27 und ein Übertragungsmittel 28. Die Betätigungseinrichtung 5 ist zum Lösen der Verbindung zwischen der Vorder-Schließleiste 16 und der Hinter-Schließleiste 17 und damit zwischen der Vorderwand 11 und der Rückwand 12 aus dem Verschlusszustand 20 ausgebildet.

Das Betätigungsmittel 27 ist als Betätigungshebel ausgebildet. Das Betätigungsmittel 27 ist an der Aufhängeeinrichtung 6 um eine parallel zu der Längsachse 18 orientierte Hebelachse 29 drehbar gelagert.

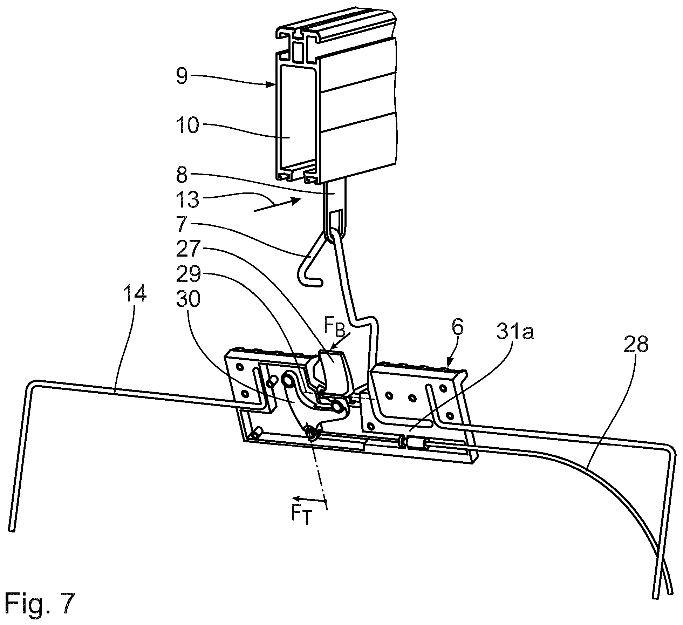

Das Betätigungsmittel 27 steht mit einem Betätigungsmechanismus 30 in kraftübertragender Verbindung. Der Betätigungsmechanismus 30 ist in Fig. 7 im Detail dargestellt. Der Betätigungsmechanismus 30 ist dazu ausgebildet eine entgegen der Transportrichtung 13 orientierte Betätigungskraft F_{B} in eine parallel zu der Längsachse 18 orientierte Übertragungskraft F_{T} zu wandeln. Der Betätigungsmechanismus 13 steht in kraftübertragender Verbindung mit dem Übertragungsmittel 28.

Das Übertragungsmittel 28 ist als Bowdenzug ausgebildet. Das Übertragungsmittel 28 erstreckt sich zwischen dem Betätigungsmechanismus 30 und der Verschlusseinrichtung 4. Eine Hülle des Bowdenzugs ist an einem Gehäuse 31 a des Betätigungsmechanismus 30 und an einem Schließleisten-Anschluss 31b der Vorder-Schließleiste 16 angebracht. Eine Seele des Bowdenzugs ist an dem Betätigungsmechanismus 30 und an einem Riegel-Anschluss 32 des Schließriegels 23 angebracht. Der Riegel-Anschluss 32 ist entlang der Längsachse 18 beabstandet zu der Riegelachse 22 angeordnet. Das Übertragungsmittel 28 ist derart an der Verschlusseinrichtung 4 angebracht, dass die Übertragungskraft F_{T} in vertikaler Richtung nach oben auf den Riegel-Anschluss 32 wirkt.

Die Vorder-Schließleiste 16 umfasst eine Schließfeder 33. Die Schließfeder 33 steht in kraftübertragender Verbindung mit dem Riegel-Anschluss 32. Die Schließfeder 33 bewirkt eine in vertikaler Richtung nach unten auf den Riegel-Anschluss 32 wirkende Schließfederkraft F_{S}. Die Schließfederkraft Fs wirkt somit einer Verlagerung des Schließriegels 23 aus dem Verschlusszustand 20 entgegen.

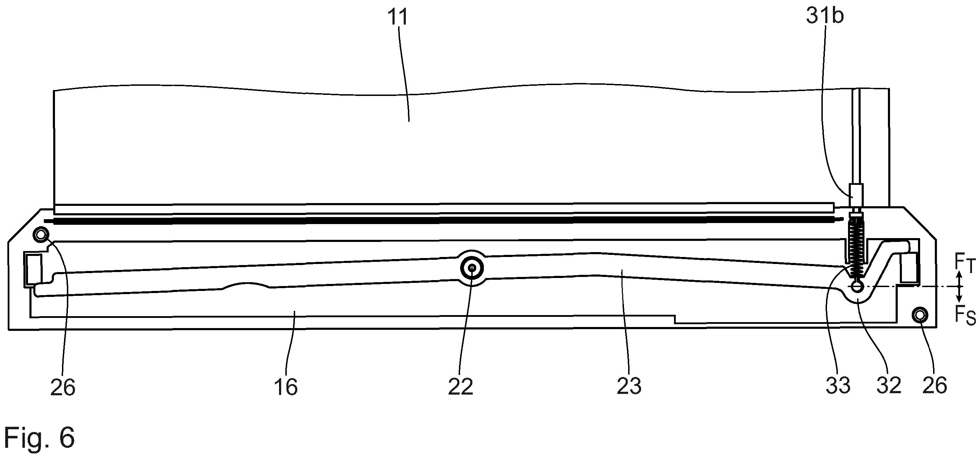

In Fig. 6 ist die Verschlusseinrichtung 4 in einem Offenzustand 34 dargestellt. Der Schließriegel 23 ist um die Riegelachse 22 verdreht. Die formschlüssige Verbindung zwischen dem Schließriegel 23 und den beiden Riegeleingriffen 24 ist gelöst. Die Vorder-Schließleiste 16 und die Hinter-Schließleiste 17 sind entlang der Mittelebene 19 zueinander verlagerbar und die Verbindung zwischen der Vorderwand 11 und der Rückwand 12 ist gelöst.

Die Funktionsweise der Tragvorrichtung 1 zum Aufnehmen der Waren 2 ist wie folgt:
Die Tragvorrichtung 1 befindet sich in dem Verschlusszustand 20. Der Schließriegel 23 greift formschlüssig in die beiden Riegeleingriffe 24 ein. Die Vorder-Schließleiste 16 ist fest mit der Hinter-Schließleiste 17 verbunden. Die an der Vorder-Schließleiste 16 angebrachte Vorderwand 11 ist fest mit der an der Hinter-Schließleiste 17 angebrachten Rückwand 12 verbunden. Die Tragwand 3 begrenzt das Tragvolumen 21 nach vorne, nach unten und nach hinten. Das Federmittel 26 ist zwischen der Vorder-Schließleiste 16 und der Hinter-Schließleiste 17 gespannt und die Schließfeder 33 ist entspannt.

Durch Betätigung des Schienenantriebs wird die Tragvorrichtung 1 entlang des Führungsprofils 10 in Richtung einer nicht dargestellten Beladestation verlagert. In der Beladestation werden die Waren 2 über den Beladerahmen 14 in das Tragvolumen 21 eingebracht. Bedingt durch das Gewicht der Waren 2 passt sich die formflexible Tragwand 3 an die Form der Waren 2 an. Die Waren 2 sind fest zwischen der Vorderwand 11 und der Rückwand 12 eingefasst.

Die Tragvorrichtung 1 wird mittels des Schienenantriebs entlang des Führungsprofils 10 zu einer nicht dargestellten Entladestation verlagert.

In der Entladestation wird mittels eines nicht dargestellten Betätigungsantriebs die entgegen der Transportrichtung 13 wirkende Betätigungskraft F_{B} auf das Betätigungsmittel 27 ausgeübt. Das Betätigungsmittel 27 wird um die Hebelachse 29 gedreht. Die Betätigungskraft F_{B} wird durch den Betätigungsmechanismus 30 in die Übertragungskraft F_{T} gewandelt und der Betätigungsmechanismus 30 erfährt eine Drehung um eine parallel zu der Transportrichtung 13 orientierte Achse. Das Übertragungsmittel 28 überträgt die Übertragungskraft F_{T} von dem Betätigungsmechanismus 30 auf den Riegel-Anschluss 32. Durch Anheben des Riegel-Anschlusses 32 in vertikaler Richtung nach oben wird der Schließriegel 23 um die Riegelachse 22 gedreht. Der Schließriegel 23 wird soweit um die Riegelachse 22 gedreht, bis dieser außer Eingriff mit den beiden Riegeleingriffen 24 steht. Die Verschlusseinrichtung 4 befindet sich in dem Offenzustand 34.

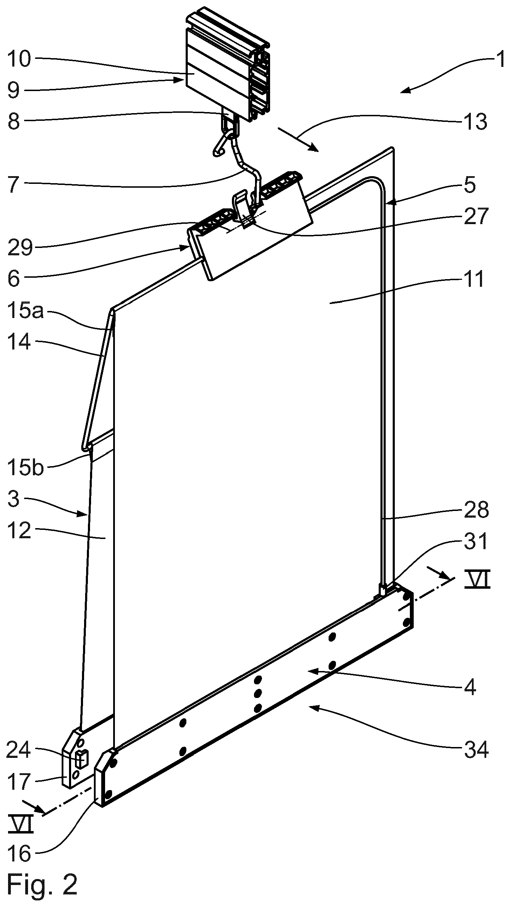

Die von dem Federmittel 26 bereitgestellte Öffnungskraft bewirkt eine Verlagerung der Vorder-Schließleiste 16 relativ zu der Hinter-Schließleiste 17 senkrecht zu der Mittelebene 19. Die Unterseite der Vorderwand 11 und die Unterseite der Rückwand 12 werden voneinander weg verlagert. Die Tragwand 3 gibt das Tragvolumen 21 nach unten frei und befindet sich in dem in Fig. 2 dargestellten Offenzustand 34. Die Waren 2 fallen schwerkraftbedingt nach unten aus der Tragvorrichtung 1 heraus. Der Betätigungsantrieb gelangt außer Eingriff mit dem Betätigungsmittel 27.

Die Tragvorrichtung 1 wird mittels des Schienenantriebs entlang des Führungsprofils 10 zu einer nicht dargestellten Schließstation verlagert.

Die Tragvorrichtung 1 wird aus dem Offenzustand 34 wieder in den Verschlusszustand 20 überführt. Der Betätigungsantrieb wird hierzu in Eingriff mit dem Betätigungsmittel 27 gebracht und übt die Betätigungskraft F_{B} auf das Betätigungsmittel 27 aus. Die Verschlusseinrichtung 4 wird hierdurch wieder in den Offenzustand 34 verlagert. Die Vorder-Schließleiste 16 wird mittels eines nicht dargestellten Schließantriebs in Richtung der Hinter-Schließleiste 17 verlagert. Die beiden Riegeleingriffe 24 gelangen in Kontakt mit der Vorder-Schließleiste 16. Die Riegeleingriffe 24 wirken dabei als Zentriermittel 25 und führen die Vorder-Schließleiste 16 relativ zu der Hinter-Schließleiste 17 senkrecht zu der Mittelebene 19.

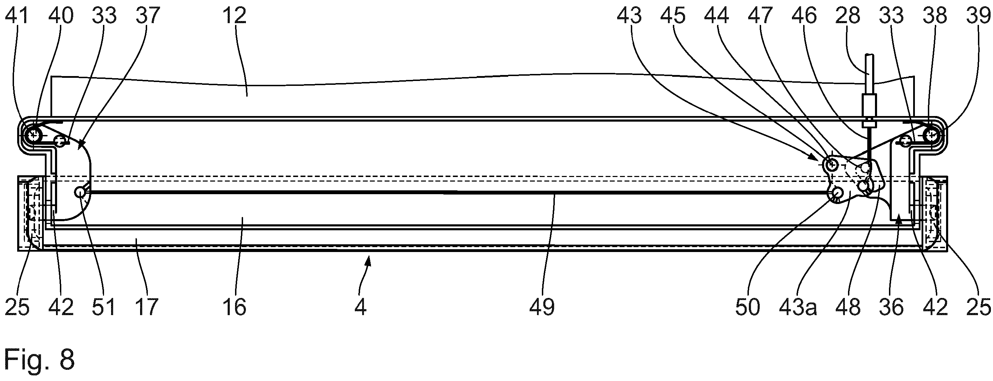

In den Fig. 8 bis 11 ist ein weiteres Ausführungsbeispiel der Tragvorrichtung 1, welches Teil der vorliegenden Erfindung ist, beschrieben. Im Unterschied zu dem vorangegangenen Ausführungsbeispiel weist die Verschlusseinrichtung 4 zwei relativ zueinander bewegliche Schließriegel 36, 37 zum lösbaren Verbinden einer Vorder-Schließleiste 16 mit einer Hinter-Schließleiste 17 auf. Ein erster Schließriegel 36 ist über ein erstes Drehlager 38 um eine erste Riegelachse 39, insbesondere an einer Vorder-Schließleiste 16, drehbar gelagert. Ein zweiter Schließriegel 37 ist über ein zweites Drehlager 40 um eine zweite Riegelachse 41, insbesondere an der Vorder-Schließleiste 16, drehbar gelagert. Zur Ausbildung des ersten Drehlagers 38 und des zweiten Drehlagers 40 weist die Vorder-Schließleiste 16 zwei Lagerstifte auf. Der erste Schließriegel 36 und der zweite Schließriegel 37 weisen jeweils eine Lagerbohrung auf. Die Schließriegel 36, 37 weisen jeweils einen Riegelstift 42 zum reversiblen Eingreifen in einen Riegeleingriff 24 auf.

Die Verschlusseinrichtung 4 weist eine Kopplungseinheit 43 auf. Die Kopplungseinheit 43 umfasst ein Umlenkmittel 43a. Die Schließriegel 36, 37 stehen mit dem Übertragungsmittel 28 über das Umlenkmittel 43a in Wirkverbindung. Das Umlenkmittel 43a ist über ein Umlenklager 44 um eine Umlenkachse 45, insbesondere an der Vorder-Schließleiste 16, drehbar gelagert. Zur Ausbildung des Umlenklagers 44 weist die Vorder-Schließleiste 16 einen Lagerstift auf. Das Umlenkmittel 43a weist eine Lagerbohrung auf.

Das Übertragungsmittel 28 ist als Bowdenzug ausgebildet. Eine Zugseele 46 des Übertragungsmittels 28 ist an dem Umlenkmittel 43a angebracht. Das Übertragungsmittel 28 ist derart mit dem Umlenkmittel 43a verbunden, dass eine Übertragungskraft F_{T} eine zu der Umlenkachse 45 beabstandete Wirkachse aufweist.

Das Umlenkmittel 43a weist einen Betätigungsstift 47 auf. Der Betätigungsstift 47 steht in Eingriff mit einer Betätigungsausnehmung 48 des ersten Schließriegels 36. Über den Betätigungsstift 47 und die Betätigungsausnehmung 48 steht das Umlenkmittel 43a in formschlüssiger Verbindung mit dem ersten Schließriegel 36.

Das Umlenkmittel 43a steht mit dem zweiten Schließriegel 37 über einen Seilzug 49 in Wirkverbindung. Das Umlenkmittel 43a weist eine Umlenköse 50 zum Verbinden mit einem Zugnippel des Seilzugs 49 auf. Der zweite Schließriegel 37 weist eine Riegelöse 51 zum Verbinden mit dem Seilzug 49 auf. Eine Zugachse 52 des Seilzugs 49 ist beabstandet zu der zweiten Riegelachse 41 angeordnet.

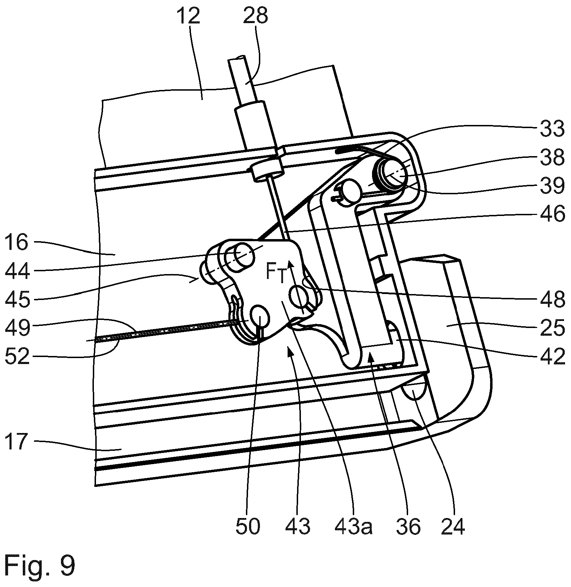

In der Fig. 9 ist die Verschlusseinrichtung 4 weiter im Detail dargestellt. Die Verschlusseinrichtung 4 weist zwei Schließfedern 33 auf. Die Schließfedern 33 wirken jeweils zwischen den Schließriegeln 36, 37 und der Vorder-Schließleiste 16. Die Schließfedern 33 bewirken eine Kraft zum Verlagern des jeweiligen Schließriegels 36, 37 aus der Offenstellung in die Verschlussstellung. Die Schließfedern 33 sind als Drehfedern ausgebildet.

Die Verschlusseinrichtung 4 umfasst ein Zentriermittel 25. Das Zentriermittel 25 ist an der Hinter-Schließleiste 17 angeordnet. Das Zentriermittel 25 ist an der Hinter-Schließleiste 17 angeordnet. Das Zentriermittel 25 ist als Fase ausgebildet.

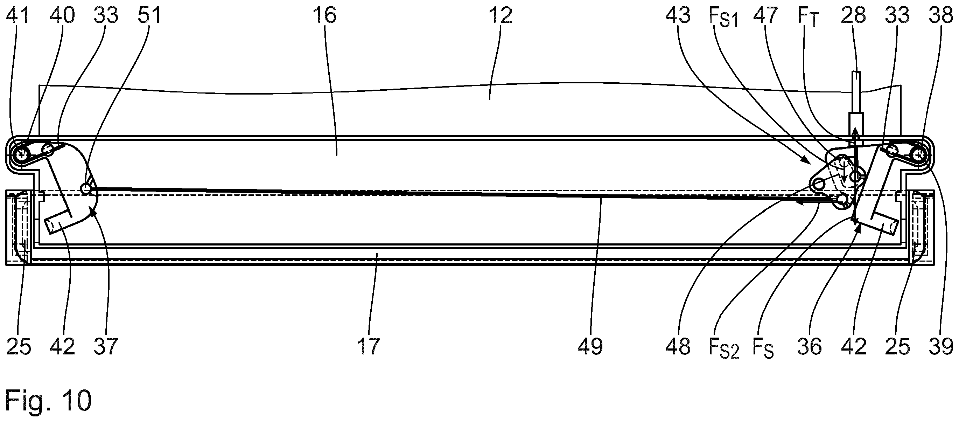

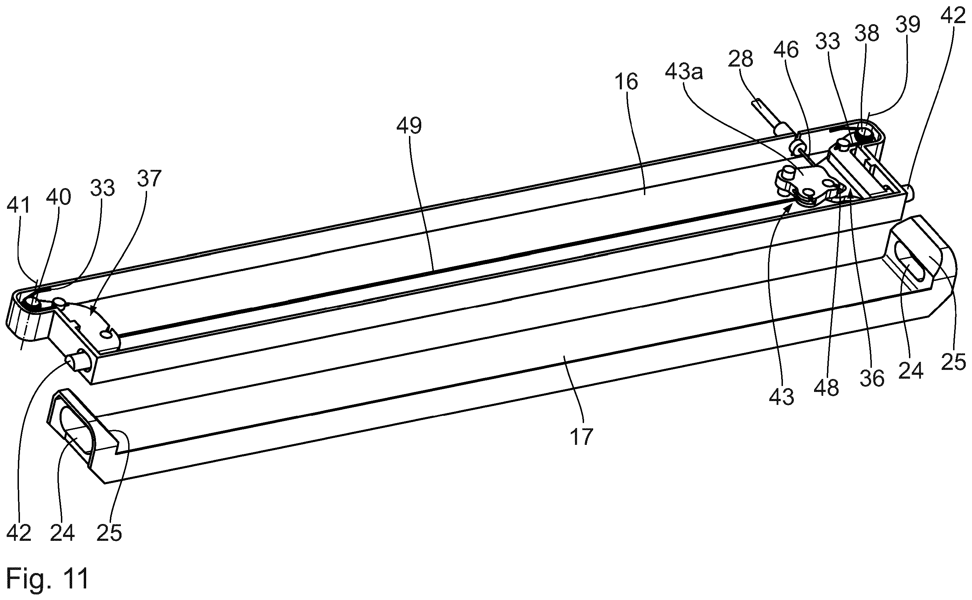

In den Fig. 10 und Fig. 11 ist die Tragvorrichtung 1 in dem Offenzustand angeordnet. Die Verbindung zwischen der Vorder-Schließleiste 16 und der Hinter-Schließleiste 17 ist gelöst. In der Fig. 10 sind die Schließriegel 36, 37 in der Offenstellung angeordnet. In der Fig. 11 sind die Schließriegel 36, 37 in der Verschlussstellung angeordnet.

Die Funktionsweise der Tragvorrichtung 1 gemäß diesem Ausführungsbeispiel entspricht der Funktionsweise der Tragvorrichtung 1 gemäß dem vorgenannten Ausführungsbeispiel. Die Tragvorrichtung 1 befindet sich zunächst in dem Verschlusszustand 20. Zum Verlagern der Tragvorrichtung 1 in den Offenzustand 34 wird die Betätigungskraft F_{B} auf das Betätigungsmittel 27 ausgeübt. Über die Zugseele 46 wird die Übertragungskraft F_{T} auf das Umlenkmittel 43a der Kopplungseinheit 43 übertragen. Das Umlenkmittel 43a dreht sich um die Umlenkachse 45. Über den Betätigungsstift 47 und die Betätigungsausnehmung 48 bewirkt das Umlenkmittel 43a eine Drehung des ersten Schließriegels 36 um die erste Riegelachse 39. Über den Seilzug 49 bewirkt das Umlenkmittel 43a eine Drehung des zweiten Schließriegels 37 um die zweite Riegelachse 41. Die Schließfedern 33 wirken über die Schließriegel 36, 37 auf das Umlenkmittel 43a. An dem Umlenkmittel 43a wirken die der Übertragungskraft F_{T} entgegenwirkenden Schließfederkräfte F_{S1}, F_{S2}.

Die Riegelstifte 42 gelangen außer Eingriff mit dem jeweiligen Riegeleingriff 24. Die Verbindung zwischen der Vorder-Schließleiste 16 und der Hinter-Schließleiste 17 wird gelöst. Die Tragvorrichtung 1 befindet sich in dem Offenzustand 34.

Zum Verlagern der Tragvorrichtung 1 aus dem Offenzustand 34 in den Verschlusszustand 20 kann die Vorder-Schließleiste 16 an die Hinter-Schließleiste 17 herangeführt werden. Das Zentriermittel 25 gewährleistet ein Verlagern der Schließriegel 36, 37 aus der Verschlussstellung in die Offenstellung. Die Schließfederkräfte F_{S1}, F_{S2} werden dabei überwunden. Die Schließriegel 36, 37 verrasten mit den Riegeleingriffen 24 formschlüssig. Die Tragvorrichtung 1 befindet sich wieder in dem Verschlusszustand 20.

Die Tragwand 3 befindet sich in dem Verschlusszustand 20 und der Betätigungsantrieb gelangt außer Eingriff mit dem Betätigungsmittel 27. Die Schließfederkraft Fs der Schließfeder 33 bewirkt ein Verlagern des Schließriegels 23 und der Betätigungseinrichtung 5 in den Verschlusszustand 20. Der Schließriegel 23 rastet in Hinterschneidungen 35 der Riegeleingriffe 24 ein. Die Schließfeder 33 ist entspannt und das Federmittel 26 ist gespannt. Die Vorderwand 11 ist über die Verschlusseinrichtung 4, insbesondere über die formschlüssige Verbindung zwischen dem Schließriegel 23 und den Riegeleingriffen 24, mit der Rückwand 12 verbunden.

Die Tragvorrichtung 1 befindet sich wieder in dem Verschlusszustand 20. Zum Aufnehmen der Waren 2 kann die Tragvorrichtung 1 wieder in die Beladestation verlagert werden.

Die formflexible Ausbildung des Übertragungsmittels 28 gewährleistet eine flexible Anpassung der Tragvorrichtung 1 an die individuelle Geometrie der Waren 2 und ermöglicht eine gewichtsreduzierte Bauweise. Die Waren 2 können somit besonders fest von der Tragwand 3 umschlossen und verliersicher in dem Tragvolumen 21 gehalten werden. Die Tragvorrichtung 1 gewährleistet somit einen besonders robusten, zuverlässigen und wirtschaftlichen Transport der Waren 2.

## Patentansprüche

1. Tragvorrichtung (1) zum Aufnehmen von Waren (2), umfassend
- eine Tragwand (3), welche
-- eine Vorderwand (11) und eine Rückwand (12) aufweist,
-- zwischen einem Verschlusszustand (20) und einem Offenzustand (34) anordenbar ist,
-- in dem Verschlusszustand (20) ein Tragvolumen (21) zum Aufnehmen der Waren (2) zumindest teilweise nach vorne, nach unten und nach hinten begrenzt, und
-- in dem Offenzustand (34) das Tragvolumen (21) nach unten freigibt,
- eine Verschlusseinrichtung (4) zur lösbaren Verbindung der Vorderwand (11) mit der Rückwand (12) in dem Verschlusszustand (20), und
- eine mit der Verschlusseinrichtung (4) verbundene Betätigungseinrichtung (5) zum Lösen der Verbindung zwischen der Vorderwand (11) und der Rückwand (12) aus dem Verschlusszustand (20) mit
-- einem beabstandet zu der Verschlusseinrichtung (4) angeordneten Betätigungsmittel (27), und
-- einem zwischen dem Betätigungsmittel (27) und der Verschlusseinrichtung (4) wirkenden Übertragungsmittel (28), welches formflexibel ausgebildet ist,- wobei die Verschlusseinrichtung (4) eine Vorder-Schließleiste (16) und eine Hinter-Schließleiste (17) aufweist, wobei die Vorder-Schließleiste (16) und die Hinter-Schließleiste (17) zur Verbindung der Vorderwand (11) mit der Rückwand (12) in dem Verschlusszustand (20) aneinander lösbar befestigt sind,
**dadurch gekennzeichnet,**
- **dass** die Verschlusseinrichtung (4) mindestens einen um eine Riegelachse (39, 40) drehbar gelagerten Schließriegel (36, 37) aufweist und,
- **dass** die Verschlusseinrichtung (4) mindestens zwei der Schließriegel (36, 37) aufweist, welche relativ zueinander verlagerbar sind.

2. Tragvorrichtung (1) gemäß Anspruch 1, **dadurch gekennzeichnet, dass** die Vorder-Schließleiste (16) und die Hinter-Schließleiste (17) starr ausgebildet sind.

3. Tragvorrichtung (1) gemäß Anspruch 1 oder 2, **dadurch gekennzeichnet, dass** das Übertragungsmittel (28) biegeweich ausgebildet ist.

4. Tragvorrichtung (1) nach einem der vorstehenden Ansprüche, **dadurch gekennzeichnet, dass** das Übertragungsmittel (28) einen Bowdenzug und/oder eine Hydraulikleitung aufweist.

5. Tragvorrichtung (1) nach einem der vorstehenden Ansprüche, **dadurch gekennzeichnet, dass** das Übertragungsmittel (28) zumindest abschnittsweise vor der Vorderwand (11) angeordnet ist, wobei die Vorderwand (11) zumindest bereichsweise formflexibel ausgebildet ist.

6. Tragvorrichtung (1) nach einem der vorstehenden Ansprüche, **dadurch gekennzeichnet, dass** sich durch die formflexible Ausbildung des Übertragungsmittels (28) dessen Form entsprechend der in der Tragvorrichtung (1) aufgenommenen Waren (2) anpassen kann.

7. Tragvorrichtung (1) nach einem der vorstehenden Ansprüche, **dadurch gekennzeichnet, dass** die Vorder-Schließleiste (16) und die Hinter-Schließ-Leiste (17) zum Verlagern aus dem Verschlusszustand (20) aneinander schräg zu einer Längsachse (18) der Tragvorrichtung (1) verschiebbar gelagert ist.

8. Tragvorrichtung (1) nach einem der vorstehenden Ansprüche, **dadurch gekennzeichnet, dass** die Verschlusseinrichtung (4) ein zwischen der Vorder-Schließleiste (16) und der Hinter-Schließleiste (17) wirkendes Federmittel (26) zum Unterstützen der Verlagerung aus dem Verschlusszustand (20) in den Offenzustand (34) aufweist.

9. Tragvorrichtung (1) nach einem der vorstehenden Ansprüche, **dadurch gekennzeichnet, dass** die Verschlusseinrichtung (4) ein Zentriermittel (25) zum geführten Verlagern der Vorder-Schließleiste (16) relativ zu der Hinter-Schließleiste (17) in den Verschlusszustand (20) aufweist.

10. Tragvorrichtung (1) nach einem der vorstehenden Ansprüche, **dadurch gekennzeichnet, dass** die Verschlusseinrichtung (4) eine zwischen den mindestens zwei Schließriegeln (36, 37) wirkende Kopplungseinheit (43) zur kinematischen Koppelung einer Verlagerung der mindestens zwei Schließriegel (36, 37) aufweist.

11. Tragvorrichtung (1) nach einem der vorstehenden Ansprüche, **dadurch gekennzeichnet, dass** die Verschlusseinrichtung (4) mindestens zwei Riegeleingriffe (24) zum Eingreifen der Schließriegel (36, 37) in dem Verschlusszustand (20) aufweist.

12. Tragvorrichtung (1) nach Anspruch 11, **dadurch gekennzeichnet, dass** die mindestens zwei Riegeleingriffe (24) relativ zu der Riegelachse um mindestens 120° versetzt zueinander angeordnet sind.

13. Tragvorrichtung (1) nach einem der vorstehenden Ansprüche, **gekennzeichnet durch** eine an der Tragwand (3) angebrachte Aufhängeeinrichtung (6) zum Aufhängen der Tragvorrichtung (1), wobei das Betätigungsmittel (27) an der Aufhängeeinrichtung (6) angebracht ist.

## Claims

1. Carrying device (1) for receiving goods (2), comprising
- a carrying wall (3) which
-- has a front wall (11) and a rear wall (12),
-- is arrangeable between a closed state (20) and an open state (34),
-- at least partially forwardly, downwardly and rearwardly delimits a carrying volume (21) for receiving the goods (2) in the closed state (20), and
-- downwardly opens up the carrying volume (21) in the open state (34),
- a closing device (4) for releasably connecting the front wall (11) to the rear wall (12) in the closed state (20), and
- an actuating device (5), connected to the closing device (4), for releasing the connection between the front wall (11) and the rear wall (12) from the closed state (20), having
-- an actuating means (27) arranged at a spacing from the closing device (4), and
-- a transmission means (28) acting between the actuating device (27) and the closing device (4), which is designed in a formflexible manner, wherein the closing device (4) has a front closing strip (16) and a rear closing strip (17), wherein the front closing strip (16) and the rear closing strip (17) are fastened together in a releasable manner to connect the front wall (11) to the rear wall (12) in the closed state (20),
**characterized in that**
- the closing device (4) has at least one locking bolt (36, 37) that is mounted so as to be rotatable about a bolt axis (39, 40),
- the closing device (4) has at least two of the locking bolts (36, 37), which are movable relative to one another.

2. Carrying device (1) according to Claim 1, **characterized in that** the front closing strip (16) and the rear closing strip (17) are configured in a rigid manner.

3. Carrying device (1) according to Claim 1 or 2, **characterized in that** the transmission means (28) is formed in a pliable manner.

4. Carrying device (1) according to one of the preceding Claims, **characterized in that** the transmission means (28) has a Bowden cable and/or a hydraulic line.

5. Carrying device (1) according to one of the preceding Claims, **characterized in that** the transmission means (28) is arranged at least sectionally in front of the front wall (11), wherein the front wall (11) is formed at least regionally in a flexible manner.

6. Carrying device (1) according to one of the preceding Claims, **characterized in that** as a result of the flexible configuration of the transmission means (28), the shape of the latter can be adapted in a manner corresponding to the goods (2) held in the carrying device (1).

7. Carrying device (1) according to one of the preceding Claims, **characterized in that**, in order to be moved out of the closed state (20), the front closing strip (16) and the rear closing strip (17) are mounted against one another so as to be displaceable obliquely with respect to a longitudinal axis (18) of the carrying device (1).

8. Carrying device (1) according to one of the preceding Claims, **characterized in that** the closing device (4) has a spring means (26), acting between the front closing strip (16) and the rear closing strip (17), for supporting the movement from the closed state (20) into the open state (34).

9. Carrying device (1) according to one of the preceding Claims, **characterized in that** the closing device (4) has a centring means (25) for moving the front closing strip (16) into the closed state (20) in a guided manner relative to the rear closing strip (17).

10. Carrying device (1) according to one of the preceding Claims, **characterized in that** the closing device (4) has a coupling unit (43), acting between the at least two locking bolts (36, 37), for the kinematic coupling of a movement of the at least two locking bolts (36, 37).

11. Carrying device (1) according to one of the preceding Claims, **characterized in that** the closing device (4) has at least two bolt engagement means (24) for the engagement of the locking bolts (36, 37) in the closed state (20).

12. Carrying device (1) according to Claim 11, **characterized in that** the at least two bolt engagement means (24) are arranged in a manner offset through at least 120° with respect to one another relative to the bolt axis.

13. Carrying device (1) according to one of the preceding Claims, **characterized by** a suspension device (6), attached to the carrying wall (3), for suspending the carrying device (1), wherein the actuating means (27) is attached to the suspension device (6).

## Revendications

1. Dispositif de support (1) destiné à recevoir des marchandises (2), comprenant
- une paroi de support (3) qui
-- présente une paroi avant (11) et une paroi arrière (12),
-- peut être positionnée entre un état fermé (20) et un état ouvert (34),
-- dans l'état fermé (20), délimite au moins partiellement vers l'avant, vers le bas et vers l'arrière un volume de support (21) destiné à recevoir les marchandises (2), et
-- dans l'état ouvert (34), libère le volume de support (21) vers le bas,
- un système de fermeture (4) pour relier de manière amovible la paroi avant (11) à la paroi arrière (12) dans l'état fermé (20), et
- un système d'actionnement (5) relié au système de fermeture (4) pour libérer la liaison entre la paroi avant (11) et la paroi arrière (12) de l'état fermé (20), comportant
-- un moyen d'actionnement (27) disposé à distance du système de fermeture (4), et
-- un moyen de transmission (28) agissant entre le moyen d'actionnement (27) et le système de fermeture (4), qui est réalisé de manière flexible en termes de forme,
- le système de fermeture (4) présentant une barre de fermeture avant (16) et une barre de fermeture arrière (17), la barre de fermeture avant (16) et la barre de fermeture arrière (17) étant fixées l'une à l'autre de manière amovible pour relier la paroi avant (11) à la paroi arrière (12) dans l'état fermé (20),
**caractérisé en ce**
- **que** le système de fermeture (4) présente au moins un verrou de fermeture (36, 37) monté de manière à pouvoir tourner autour d'un axe de verrou (39, 40) et en ce
- **que** le système de fermeture (4) présente au moins deux des verrous de fermeture (36, 37) qui peuvent être déplacés l'un par rapport à l'autre.

2. Dispositif de support (1) selon la revendication 1, **caractérisé en ce que** la barre de fermeture avant (16) et la barre de fermeture arrière (17) sont conçues rigides.

3. Dispositif de support (1) selon la revendication 1 ou 2, **caractérisé en ce que** le moyen de transmission (28) est conçu souple en flexion.

4. Dispositif de support (1) selon l'une des revendications précédentes, **caractérisé en ce que** le moyen de transmission (28) comprend un câble Bowden et/ou une conduite hydraulique.

5. Dispositif de support (1) selon l'une des revendications précédentes, **caractérisé en ce que** le moyen de transmission (28) est disposé au moins sur certaines parties devant la paroi avant (11), la paroi avant (11) étant conçue flexible en termes de forme au moins dans certaines zones.

6. Dispositif de support (1) selon l'une des revendications précédentes, **caractérisé en ce que**, grâce à la conception flexible du moyen de transmission (28), sa forme peut s'adapter en fonction des marchandises (2) reçues dans le dispositif de support (1).

7. Dispositif de support (1) selon l'une des revendications précédentes, **caractérisé en ce que** la barre de fermeture avant (16) et la barre de fermeture arrière (17) sont montées de manière à pouvoir coulisser l'une par rapport à l'autre en biais par rapport à un axe longitudinal (18) du dispositif de support (1) pour sortir de l'état fermé (20).

8. Dispositif de support (1) selon l'une des revendications précédentes, **caractérisé en ce que** le système de fermeture (4) présente un moyen à ressort (26) agissant entre la barre de fermeture avant (16) et la barre de fermeture arrière (17) pour faciliter le déplacement de l'état fermé (20) vers l'état ouvert (34).

9. Dispositif de support (1) selon l'une des revendications précédentes, **caractérisé en ce que** le système de fermeture (4) présente un moyen de centrage (25) destiné à déplacer de manière guidée la barre de fermeture avant (16) par rapport à la barre de fermeture arrière (17) vers l'état fermé (20).

10. Dispositif de support (1) selon l'une des revendications précédentes, **caractérisé en ce que** le système de fermeture (4) présente une unité d'accouplement (43) agissant entre lesdits au moins deux verrous de fermeture (36, 37) pour l'accouplement cinématique d'un déplacement desdits au moins deux verrous de fermeture (36, 37).

11. Dispositif de support (1) selon l'une des revendications précédentes, **caractérisé en ce que** le système de verrouillage (4) présente au moins deux points d'engagement de verrou (24) pour l'engagement des verrous de fermeture (36, 37) dans l'état fermé (20).

12. Dispositif de support (1) selon la revendication 11, **caractérisé en ce que** lesdits au moins deux points d'engagement de verrou (24) sont disposés de manière décalée d'au moins 120° l'un par rapport à l'autre par rapport à l'axe de verrou.

13. Dispositif de support (1) selon l'une des revendications précédentes, **caractérisé par** un système de suspension (6) fixé à la paroi de support (3) pour suspendre le dispositif de support (1), le moyen d'actionnement (27) étant fixé au système de suspension (6).
